# EUROPEAN PATENT APPLICATION

(11) **EP 4 844 934 A1**
(43) Date of publication of application: **25.11.2026**
(21) Application number: 24919692.4
(22) Date of filing: 16.08.2024
(51) Int. Cl.: H01M 50/543

(54) **BATTERY CELL, BATTERY AND ELECTRICAL APPARATUS**

(30) Priority: 23.01.2024 CN 202420166101 U
(71) Applicant: Contemporary Amperex Technology Co., Limited, Ningde, Fujian 352100 (CN)
(72) Inventor: CHEN, Wenwei, Ningde, Fujian 352100 (CN); LIN, Denghua, Ningde, Fujian 352100 (CN); LI, Quankun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/112793
(87) International publication number: WO 2025/156610

(57) **Abstract**

A battery cell, a battery, and a power consuming apparatus are provided, which relate to the field of battery technologies. The battery cell includes a housing, a first terminal, and a second terminal. The first terminal includes a first threading part threaded through the housing, and a first inner fixing part and a first outer fixing part that are connected to the first threading part and arranged on an inner side and an outer side of the housing respectively. The second terminal includes a second threading part threaded through the housing, and a second inner fixing part and a second outer fixing part that are connected to the second threading part and arranged on the inner side and the outer side of the housing respectively. A material strength of the first inner fixing part is less than a material strength of the second inner fixing part, and a wall thickness of the first inner fixing part is greater than a wall thickness of the second inner fixing part.

## Description

### CROSS-REFERENCE TO RELATED APPLICATIONS

The present application is provided based on and claims priority to Chinese Patent Application No. 202420166101.5 filed on January 23, 2024, which is incorporated herein by reference in its entirety.

### TECHNICAL FIELD

The present application relates to the field of battery technologies, and in particular, to a battery cell, a battery, and a power consuming apparatus.

### BACKGROUND

In recent years, new energy automobiles have been rapidly developed. In the field of electric automobiles, a power battery, as a power source of an electric automobile, plays an important role that is irreplaceable. The power battery includes several battery cells. However, it is difficult to achieve a balance between the reliability and costs of the battery cells.

### SUMMARY

Embodiments of the present application provide a battery cell, a battery, and a power consuming apparatus, which can achieve a balance between the reliability and low costs of the battery cell.

According to a first aspect, an embodiment of the present application provides a battery cell, including: a housing, a first terminal, and a second terminal. The first terminal includes a first threading part threaded through the housing, and a first inner fixing part and a first outer fixing part that are connected to the first threading part and arranged on an inner side and an outer side of the housing respectively. The second terminal includes a second threading part threaded through the housing, and a second inner fixing part and a second outer fixing part that are connected to the second threading part and arranged on an inner side and an outer side of the housing respectively. A material strength of the first inner fixing part is less than a material strength of the second inner fixing part, and a wall thickness of the first inner fixing part is greater than a wall thickness of the second inner fixing part.

In the foregoing technical solution, the capacity of the battery cell may be determined by the wall thickness of the first fixing part having a relatively weak material strength. In the present application, the wall thickness of the second inner fixing part having a relatively strong material strength is set to be less than the wall thickness of the first inner fixing part having a relatively weak material strength, so that the second inner fixing part can be thinned without affecting the capacity of the battery cell and the pressure resistance level of the second terminal, thereby helping reduce material costs and weight of the second terminal. In addition, because the wall thickness of the first inner fixing part having a relatively weak material strength is greater than the wall thickness of the second inner fixing part having a relatively strong material strength, the pressure resistance level of the first terminal also satisfies the requirement.

In some embodiments, the first threading part defines a first accommodating slot, the first accommodating slot is open toward the inner side or the outer side of the housing, the first threading part includes a first end wall part disposed opposite to an open mouth of the first accommodating slot, a host material of the first inner fixing part is the same as that of the first end wall part, and a wall thickness of the first end wall part is greater than the wall thickness of the first inner fixing part.

In the foregoing technical solution, setting the wall thickness of the first end wall part of the first terminal to be greater than the wall thickness of the first inner fixing part is equivalent to increasing the wall thickness at the center of the first terminal while satisfying the pressure resistance level at the edge of the first terminal, so that when the area at the center of the first terminal is relatively large, a good structural strength can be exhibited, and reliability of the first terminal can be improved. Alternatively, setting the wall thickness of the first inner fixing part to be less than the wall thickness of the first end wall part of the first terminal is equivalent to reducing the wall thickness at the edge of the first terminal while satisfying the structural strength at the center of the first terminal, so that materials can be saved, costs can be reduced, occupation of the height space in the housing at the edge of the first terminal can be reduced, and capacity of the battery cell can be improved.

In some embodiments, a first through-hole connecting the inner side of the housing and the first accommodating slot is formed on the first end wall part, a battery core assembly of the battery cell includes a first conductive part electrically connected to the first terminal, the first conductive part is threaded through the first through-hole and includes a first connection segment received in the first accommodating slot, and the first connection segment is overlapped to the first end wall part and is welded to the first end wall part.

In the foregoing technical solution, by disposing the first through-hole to enable the first conductive part to extend into the first accommodating slot, the first accommodating slot may function to receive the first conductive part, thereby reducing occupation of the height space of an accommodating cavity by the first conductive part, and improving the capacity of the battery cell. In addition, the wall thickness of the first inner fixing part is set to be less than the wall thickness of the first end wall part, so that the relatively thick first end wall part may be strengthened, to satisfy the welding depth of fusion and the structural strength. In addition, the relatively thin first inner fixing part is thinned relative to the first end wall part, thereby improving the capacity of the battery cell and reducing material costs while satisfying the pressure resistance level.

In some embodiments, the first end wall part is disposed close to the inner side of the housing relative to the first accommodating slot, and an inner end surface of the first inner fixing part is flush with an inner end surface of the first end wall part.

In the foregoing technical solution, by setting a side surface of the first inner fixing part that is close to the accommodating cavity to be flush with a side surface of the first end wall part that is close to the accommodating cavity, processing of the first terminal can be simplified, processing difficulty can be reduced, and production costs can be reduced. In addition, because the inner end surface of the first end wall part does not protrude from the inner end surface of the first inner fixing part toward the accommodating cavity, occupation of the height space in the housing at the center of the first terminal is reduced, and a risk that the first terminal is short-circuited to the battery core assembly is reduced.

In some embodiments, the first end wall part is made of aluminum and has the wall thickness ranging from 2.2 mm to 0.8 mm, and the wall thickness of the first inner fixing part ranges from 2 mm to 0.8 mm.

In the foregoing technical solution, the wall thickness of the first end wall part is not excessively large, so that the volume of the first accommodating slot is not excessively small, and a receiving requirement for the first conductive part is satisfied. The wall thickness of the first end wall part is not excessively small, so that the first end wall part can satisfy a requirement for the welding depth of fusion between the first end wall part and the first conductive part and a requirement for the structural strength of the first end wall part. The wall thickness of the first inner fixing part is not excessively large, so that occupation of the height space of the accommodating cavity by the first inner fixing part is reduced, the capacity of the battery cell is improved, and material costs can be reduced. The wall thickness of the first inner fixing part is not excessively small, so that the pressure resistance level of the first terminal is satisfied, to alleviate a problem that a large pressure inside the housing detaches the first terminal from the housing.

In some embodiments, the wall thickness of the first end wall part is 2.2 mm, and the wall thickness of the first inner fixing part is 2 mm.

In the foregoing technical solution, the wall thickness of the first end wall part is set to 2.2 mm, and the wall thickness of the first inner fixing part is set to 2 mm, so that a receiving requirement for the first conductive part can be better satisfied, and the first end wall part can satisfy a requirement for the welding depth of fusion between the first end wall part and the first conductive part and a requirement for the structural strength of the first end wall part. In addition, the first inner fixing part occupies a small height space of the accommodating cavity, thereby improving the capacity of the battery cell, reducing material costs, satisfying the pressure resistance level of the first terminal, and alleviating a problem that a large pressure inside the housing detaches the first terminal from the housing.

In some embodiments, the second threading part defines a second accommodating slot, the second accommodating slot is open toward the inner side or the outer side of the housing, the second threading part includes a second end wall part disposed opposite to an open mouth of the second accommodating slot, a host material of the second inner fixing part is the same as that of the second end wall part, and a wall thickness of the second end wall part is less than the wall thickness of the second inner fixing part.

In the foregoing technical solution, setting the wall thickness of the second end wall part of the second terminal to be less than the wall thickness of the second inner fixing part is equivalent to reducing the wall thickness of the second end wall part having a relatively large material strength while satisfying the pressure resistance level at the edge of the second terminal, and reducing the material costs of the second terminal and increasing the volume of the second accommodating slot while satisfying the structural strength of the second end wall part. Alternatively, setting the wall thickness of the second inner fixing part to be greater than the wall thickness of the second end wall part of the second terminal is equivalent to increasing the wall thickness of the second inner fixing part while satisfying the structural strength of the second end wall part, thereby improving the pressure resistance level of the second terminal. In addition, because the wall thickness of the second inner fixing part is less than the wall thickness of the first inner fixing part, even if the wall thickness of the second inner fixing part is increased, occupation of the height space in the housing is not increased, thereby ensuring the capacity of the battery cell.

In some embodiments, a second through-hole connecting the inner side of the housing and the second accommodating slot is formed on the second end wall part, the battery core assembly of the battery cell includes a second conductive part of the second terminal, the second conductive part is threaded through the second through-hole and includes a second connection segment received in the second accommodating slot, and the second connection segment is overlapped to the second end wall part and is welded to the second end wall part.

In the foregoing technical solution, by disposing the second through-hole to enable the second conductive part to extend into the second accommodating slot, the second accommodating slot may function to receive the second conductive part, thereby reducing occupation of the height space of the accommodating cavity by the second conductive part, and improving the capacity of the battery cell. In addition, the wall thickness of the second end wall part of the second terminal is less than the wall thickness of the second inner fixing part, so that on the premise that the pressure resistance level of the second terminal at the edge is sufficient, the volume of the second accommodating slot can be increased, to help receive the second conductive part to a larger extent, and facilitate welding between the second connection segment and the second end wall part.

In some embodiments, the second end wall part is disposed close to the inner side of the housing relative to the second accommodating slot, and an inner end surface of the second inner fixing part is flush with an inner end surface of the second end wall part.

In the foregoing technical solution, by setting a side surface of the second inner fixing part that is close to the accommodating cavity to be flush with a side surface of the second end wall part that is close to the accommodating cavity, processing of the second terminal can be simplified, processing difficulty can be reduced, and production costs can be reduced. In addition, because the inner end surface of the second end wall part does not protrude from the inner end surface of the second inner fixing part toward the accommodating cavity, occupation of the height space in the housing at the center of the second terminal is reduced, and a risk that the second terminal is short-circuited to the battery core assembly is reduced.

In some embodiments, the second end wall part is made of copper and has the wall thickness ranging from 1.3 mm to 0.8 mm, and the wall thickness of the second inner fixing part ranges from 1.6 mm to 0.8 mm.

In the foregoing technical solution, the wall thickness of the second end wall part is not excessively large, so that the volume of the second accommodating slot is relatively large, a receiving requirement for the second conductive part is increased, and material costs are relatively low. The wall thickness of the second end wall part is not excessively small, so that the second end wall part can satisfy a requirement for the welding depth of fusion between the second end wall part and the second conductive part and a requirement for the structural strength of the second end wall part. The wall thickness of the second inner fixing part is not excessively large, so that occupation of the height space of the accommodating cavity by the second inner fixing part is reduced, the capacity of the battery cell is improved, and material costs can be reduced. The wall thickness of the second inner fixing part is not excessively small, so that the pressure resistance level of the second terminal is satisfied, to alleviate a problem that a large pressure inside the housing detaches the second terminal from the housing.

In some embodiments, the wall thickness of the second end wall part is 1.2 mm, and the wall thickness of the second inner fixing part is 1.5 mm.

In the foregoing technical solution, a receiving requirement for the second conductive part can be better satisfied, and the second end wall part can satisfy a requirement for the welding depth of fusion between the second end wall part and the second conductive part and a requirement for the structural strength of the second end wall part, and reduce material costs of the second end wall part. In addition, the second inner fixing part occupies a small height space of the accommodating cavity, thereby improving the capacity of the battery cell, reducing material costs, satisfying the pressure resistance level of the second terminal, and alleviating a problem that a large pressure inside the housing detaches the second terminal from the housing.

In some embodiments, the first threading part defines the first accommodating slot, the first accommodating slot is open toward the inner side or the outer side of the housing, the first threading part includes the first end wall part disposed opposite to an open mouth of the first accommodating slot, the second threading part defines the second accommodating slot, the second accommodating slot is open toward the inner side or the outer side of the housing, the second threading part includes the second end wall part disposed opposite to an open mouth of the second accommodating slot, where a material strength of the first end wall part is less than a material strength of the second end wall part, and a wall thickness of the first end wall part is greater than a wall thickness of the second end wall part.

In the foregoing technical solution, the material strength of the first end wall part is less than the material strength of the second end wall part, and if the first end wall part is not easy to deform during simulated aeration, the second end wall part is not easy to deform even when the wall thickness of the second end wall part of the second terminal is less than the wall thickness of the first end wall part of the first terminal. Therefore, setting the wall thickness of the second end wall part to be small relative to the wall thickness of the first end wall part can effectively increase the volume of the second accommodating slot, and reduce material costs and weight of the second terminal.

In some embodiments, a material strength of the first outer fixing part is less than a material strength of the second outer fixing part, and a wall thickness of the first outer fixing part is greater than a wall thickness of the second outer fixing part.

In the foregoing technical solution, the material strength of the first outer fixing part is less than the material strength of the second outer fixing part, and when the wall thickness of the first outer fixing part enables the structural strength of the first outer fixing part to satisfy a requirement, the structural strength of the second outer fixing part can also have a requirement by setting the wall thickness of the second outer fixing part to be less than the wall thickness of the first outer fixing part. Therefore, thinning the second outer fixing part relative to the first outer fixing part can reduce material costs and weight of the second terminal while satisfying the requirement for the structural strength.

In some embodiments, the housing has a first mounting hole through which the first threading part is threaded, the first threading part includes a first surrounding wall part extending along a peripheral direction of the first mounting hole, and the first accommodating slot is formed in the first surrounding wall part; and the housing has a second mounting hole through which the second threading part is threaded, the second threading part includes a second surrounding wall part extending along a peripheral direction of the second mounting hole, and the second accommodating slot is formed in the second surrounding wall part, where a material strength of the first surrounding wall part is less than a material strength of the second surrounding wall part, and a wall thickness of the first surrounding wall part is greater than a wall thickness of the second surrounding wall part.

In the foregoing technical solution, the material strength of the first surrounding wall part is less than the material strength of the second surrounding wall part, and when the wall thickness of the first surrounding wall part enables the structural strength of the first surrounding wall part to satisfy a requirement, the structural strength of the second surrounding wall part can also satisfy a requirement by setting the wall thickness of the second surrounding wall part to be less than the wall thickness of the first surrounding wall part. Therefore, thinning the second surrounding wall part relative to the first surrounding wall part can reduce material costs and weight of the second terminal while satisfying the requirement for the structural strength, and can increase the volume of the second accommodating slot.

In some embodiments, the first terminal is an integral member having a same host material everywhere, the second terminal is an integral member having a same host material everywhere, and a material strength of the second terminal is greater than a material strength of the first terminal.

In the foregoing technical solution, processing difficulty and manufacturing costs of the first terminal and the second terminal can be reduced. In addition, material strengths everywhere of the second terminal are greater than material strengths everywhere of the first terminal, so that the wall thickness of the second terminal can be reduced to a larger extent, thereby further facilitating reduction of material costs and weight of the second terminal.

In some embodiments, the first terminal is a positive terminal, the host material of the first terminal is aluminum, the second terminal is a negative terminal, and the host material of the second terminal is copper.

In the foregoing technical solution, because the material strength of aluminum is low relative to the material strength of copper, or the material strength of copper is high relative to the material strength of aluminum, the requirement that the material strength of the negative terminal is greater than the material strength of the positive terminal can be satisfied, which helps reduce the material costs and weight of the negative terminal.

In some embodiments, a first terminal cover plate is externally welded to the first terminal, the first terminal cover plate is an aluminum cover plate and is suitable for being welded to a bus component, a second terminal cover plate is externally welded to the second terminal, the second terminal cover plate is a copper aluminum composite cover plate and is welded to the second terminal by using a copper part, and an aluminum part of the second terminal cover plate is suitable for being welded to the bus component.

In the foregoing technical solution, welding between a terminal cover plate, and a terminal and a bus component is facilitated.

In some embodiments, the housing includes a first housing wall, and the first terminal and the second terminal are both disposed on the first housing wall.

In the foregoing technical solution, mounting both the first terminal and the second terminal on the housing wall on the same side can simplify processing, reduce processing difficulty, and improve processing efficiency, and can reduce occupation of the height space in the housing, thereby improving the capacity of the battery cell.

According to a second aspect, an embodiment of the present application further provides a battery, including the battery cell according to any one of the foregoing solutions.

In the foregoing technical solution, a balance between reliability and low costs of the battery cell according to this embodiment of the present application can be achieved, so that the improvement in the performance of the battery is facilitated, and the costs of the battery are reduced.

According to a third aspect, an embodiment of the present application further provides a power consuming apparatus, including the battery according to any one of the foregoing solutions.

In the foregoing technical solution, the battery has the performance improved and the costs reduced, so that the operating power consuming performance of the power consuming apparatus is improved, and the costs of the power consuming apparatus are reduced.

### BRIEF DESCRIPTION OF THE DRAWINGS

To provide a clearer explanation of the technical solution of the embodiments of the present application, a brief introduction will be given to the accompanying drawings required in the embodiments. It should be noted that only some embodiments of the present application are shown in the accompanying drawings, so that the accompanying drawings should not be considered as a limitation on a range. A person of ordinary skill in the art can obtain other related accompanying drawings based on the accompanying drawings without a creative work.
FIG. 1 is a schematic diagram of a structure of a vehicle provided in some embodiments of the present application;
FIG. 2 is a structure exploded view of a battery according to some embodiments of the present application;
FIG. 3 is a schematic diagram of a structure of a battery cell according to some embodiments of the present application;
FIG. 4 is an exploded view of the structure of the battery cell shown in FIG. 3;
FIG. 5 is a schematic diagram of an orthographic projection of a battery cell according to some embodiments of the present application;
FIG. 6 is a cross-sectional view along a line A-A in FIG. 5;
FIG. 7 is a partial increased view of a part B circled in FIG. 6;
FIG. 8 is a partial increased view of a part C circled in FIG. 6;
FIG. 9 is a cross-sectional view along a line E-E in FIG. 5;
FIG. 10 is a partial increased view of a part D circled in FIG. 6; and
FIG. 11 is a cross-sectional view along a line F-F in FIG. 5.

Reference numerals: vehicle 1000; first direction X; second direction Y; third direction Z; battery 100; controller 200; motor 300; box 101; first box body 1011; second box body 1012; battery cell 102; housing 1; accommodating cavity 10; first mounting hole 111; second mounting hole 112; first housing wall 11; second housing wall 12; third housing wall 13; terminal 2; first terminal 21; first threading part 211; first inner fixing part 212; first outer fixing part 213; first accommodating slot 2111; first end wall part 2112; first surrounding wall part 2113; first through-hole 2114; second terminal 22; second threading part 221; second inner fixing part 222; second outer fixing part 223; second accommodating slot 2211; second end wall part 2212; second surrounding wall part 2213; second through-hole 2214; sealing insulated assembly 3; first insulated member 31; second insulated member 32; sealing ring 33; battery core assembly 4; active substance coating part 41; conductive part 42; first conductive part 421; first connection segment 4211; second conductive part 422; second connection segment 4221; first terminal cover plate 51; liquid injection hole 511; second terminal cover plate 52; copper part 521; aluminum part 522; sealing structure 6; first sealing member 61; second sealing member 62; and pressure relief structure 7.

### DETAILED DESCRIPTION

To make the objectives, technical solutions, and advantages of embodiments of the present application clearer, the following clearly describes the technical solutions in embodiments of the present application with reference to the accompanying drawings in embodiments of the present application. It is clear that the described embodiments are merely some rather than all of embodiments of the present application. All other embodiments obtained by a person of ordinary skill in the art based on the embodiments of the present application without making creative efforts shall fall within the protection scope of the present application.

Unless otherwise defined, meanings of all technical and scientific terms used in the present application are the same as those usually understood by a person skilled in the art to which the present application belongs. In the present application, the terms used in the specification of the present application are merely intended to describe objectives of specific embodiments, but are not intended to limit the present application. The terms "include", "include", and any variant thereof in the description and the claims of the present application and the description of the accompanying drawings are intended to cover non-exclusive inclusion. The terms "first", "second", and the like in the specification and claims of the present application or the foregoing accompanying drawings are used to distinguish different objects, rather than to describe a specific order or primary-secondary relationship.

"Embodiment" mentioned in the present application means that specific features, structures, or characteristics described with reference to the embodiment may be included in at least one embodiment of the present application. The term appearing at different positions of the specification may not necessarily refer to the same embodiment or an independent or alternative embodiment that is mutually exclusive with another embodiment.

In the descriptions of the present application, it should be noted that unless otherwise explicitly specified or defined, the terms such as "mount", "connect", "connection", and "attach" should be understood in a broad sense. For example, the connection may be a fixed connection, a detachable connection, or an integral connection. Alternatively, the connection may be a direct connection, an indirect connection through an intermediary, or internal communication between two components. A person of ordinary skill in the art may understand specific meanings of the foregoing terms in the present application according to specific situations.

In the present application, the term "and/or" describes only an association relationship for describing associated objects and represents that three relationships may exist. For example, A and/or B may represent the following three cases: Only A exists, both A and B exist, and only B exists. In addition, in the present application, the character "/" generally indicates an "or" relationship between the associated objects.

In the embodiments of the present application, same reference numerals represent same components, and for brevity, detailed description of the same components is omitted in different embodiments. It should be understood that the dimensions such as the thickness, the length, and the width of various components in the embodiments of the present application and the entire thickness, length, and width of an integrated apparatus are merely exemplary description, and should not be construed as any limitation to the present application.

The term "a plurality of" as used in the present application refers to two or more (inclusive of two).

In the present application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell may be cylindrical, flat-shaped, cuboid-shaped, or in another shape, which is not limited in the embodiments of the present application. Generally, the battery cell is divided into three types according to encapsulating methods: a cylindrical battery cell, a prismatic battery cell, and a soft package battery cell, which is also not limited in the embodiments of the present application.

The battery mentioned in the embodiments of the present application is a single physical module including one or more battery cells to provide a higher voltage and a higher capacity. For example, the battery mentioned in the present application may include a battery module, a battery pack or the like. The battery module generally includes a plurality of battery cells. The battery pack generally includes a box for packaging one or more battery cells or one or more battery modules. The box can prevent a liquid or other foreign matter from affecting the charging or discharging of the battery cells.

The battery cell includes a housing, a battery core assembly, and an electrolyte, where the housing is configured to accommodate the battery core assembly and the electrolyte. The battery core assembly includes at least one electrode assembly, and the electrode assembly includes a positive electrode plate, a negative electrode plate, and a separator. The electrode assembly may be a wound structure, a laminated structure, or the like. The battery cell works mainly relying on movement of metal ions between the positive electrode plate and the negative electrode plate.

The positive electrode plate generally may include a positive electrode current collector and a positive electrode active substance layer, the positive electrode active substance layer is directly or indirectly coated on the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. By using a lithium-ion battery as an example, a material of the positive electrode current collector may be aluminum, and a material of the positive electrode active substance layer may be lithium cobalt oxide, lithium iron phosphate, ternary lithium, lithium manganese oxide, or the like.

The negative electrode plate generally may include a negative electrode current collector and a negative electrode active substance layer, the negative electrode active substance layer is directly or indirectly coated on the negative electrode current collector, the negative electrode current collector not coated with the negative electrode active substance layer protrudes out of the negative electrode current collector already coated with the negative electrode active substance layer, and the negative electrode current collector not coated with the negative electrode active substance layer is used as a negative electrode tab. A material of the negative electrode current collector may be copper, and a material of the negative electrode active substance layer may be carbon, silicon, or the like.

To ensure that no fusing occurs when a large current passes through, there are a plurality of positive electrode tabs and the positive electrode tabs are stacked to form a positive electrode tab part, and there are a plurality of negative electrode tabs and the negative electrode tabs are stacked to form a negative electrode tab part. An electrode terminal is arranged on the housing, the positive electrode tab part is electrically connected to a positive electrode terminal, and the negative electrode tab part is electrically connected to a negative electrode terminal. For example, the tab part may be connected to the electrode terminal, to form a direct electrical connection between the tab part and the electrode terminal. For another example, the battery core assembly may include an adapting piece, the tab part is connected to the adapting piece, and the adapting piece is connected to the electrode terminal, to form an indirect electrical connection between the tab part and the electrode terminal.

The material of the separator is not limited, and may be, for example, polypropylene, polyethylene, or the like.

In the battery cell in the related technology, the terminal is threaded through the housing and is mounted to the housing. If the pressure resistance level of the terminal is insufficient, when a pressure inside the housing is relatively large, the terminal is easily pressed and detached. In addition, when the area of the terminal is relatively large, the terminal is at a lower pressure resistance level, and is more easily pressed by gas inside the housing and detached. Therefore, in the embodiments of the present application, different wall thicknesses are designed for terminals having different material strengths, so that the wall thickness of the inner fixing part of the terminal having a relatively weak material strength is relatively large, thereby improving the pressure resistance level of the terminal and reducing a risk that the terminal is detached from the housing; and the wall thickness of the inner fixing part of the terminal having a relatively strong material strength is relatively small, thereby reducing material costs and weight and reducing occupation of the space in the housing by the terminal while satisfying the pressure resistance level of the terminal. Therefore, reliability of the battery cell can be improved and production costs of the battery cell can be reduced.

The material strength is a physical characteristic of a material, refers to a yield strength of the material, and may be learned in a manner such as table look-up or test. For example, there may be at least two learning manners. For example, in the first method, a trace element analysis may be performed on a material by using an inductively coupled plasma reflectance spectroscopy method, and then a strength of the material is determined in a manner of table look-up. For example, the standard of GB/T 3880 "Wrought aluminum and aluminum alloy plates, sheets and strips for general engineering" may be looked up for the aluminum material; and the standard GB/T 5231 "Designation and chemical composition of wrought copper and copper alloys" may be looked up for the copper material. For example, in the second method, GB228-87 "Metallic materials - tensile testing" is used to test a yield strength of a material.

An embodiment of the present application provides a power consuming apparatus using a battery as a power supply. The power consuming apparatus may be, but is not limited to, a mobile phone, a tablet, a laptop, an electric toy, an electric tool, a battery car, an electric automobile, a ship, a spacecraft, or the like. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

For ease of description, the following embodiment is described by using an example in which a power consuming apparatus according to an embodiment of the present application is a vehicle 1000.

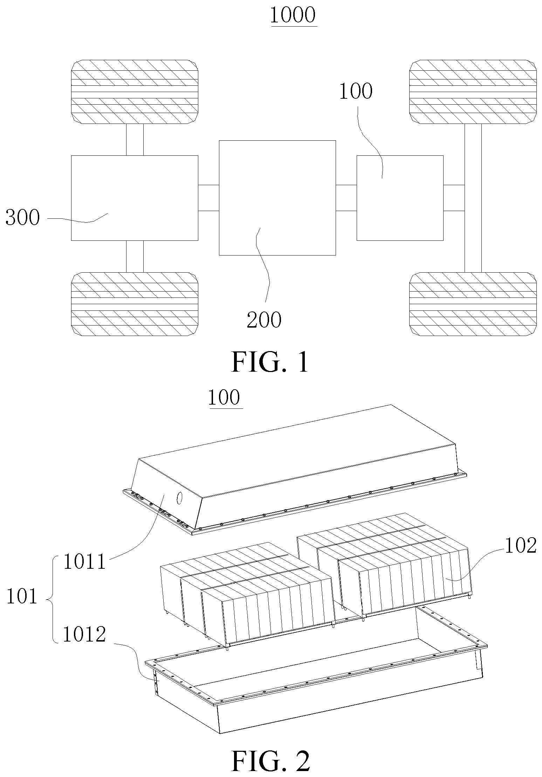

Referring to FIG. 1, FIG. 1 is a schematic diagram of a structure of a vehicle 1000 according to some embodiments of the present application. The vehicle 1000 may be a fuel powered vehicle, a gas-powered vehicle, or a new energy vehicle. The new energy vehicle may be a pure electric vehicle, a hybrid electric vehicle, an extended range vehicle, or the like. The vehicle 1000 is internally provided with a battery 100. The battery 100 may be arranged at the bottom, head, or tail of the vehicle 1000. The battery 100 may be configured to supply power to the vehicle 1000. For example, the battery 100 may be used as an operating power supply of the vehicle 1000. The vehicle 1000 may further include a controller 200 and a motor 300. The controller 200 is configured to control the battery 100 to supply power to the motor 300, for example, to satisfy operating electricity requirements during starting, navigation, and traveling of the vehicle 1000.

In some embodiments of the present application, the battery 100 may serve not only as an operating power supply of the vehicle 1000, but also as a driving power supply of the vehicle 1000, to alternatively or partially replace fuel or natural gas to provide driving power for the vehicle 1000.

Referring to FIG. 2, FIG. 2 is a schematic exploded view of a battery 100 according to some embodiments of the present application. The battery 100 includes a box 101 and a plurality of battery cells 102, where the battery cells 102 are accommodated in the box 101. The box 101 is configured to provide an assembly space for the battery cells 102, and the box 101 may use a plurality of structures. In some embodiments, the box 101 may include a first box body 1011 and a second box body 1012, the first box body 1011 and the second box body 1012 cover each other, and the first box body 1011 and the second box body 1012 jointly define the assembly space for accommodating the battery cells 102. The second box body 1012 may be a hollow structure being open on one side, the first box body 1011 may be a plate-like structure, and the first box body 1011 covers an open side of the second box body 1012, so that the first box body 1011 and the second box body 1012 jointly define the assembly space. Alternatively, each of the first box body 1011 and the second box body 1012 may be a hollow structure being open on one side, and an open side of the first box body 1011 covers an open side of the second box body 1012. Certainly, the box 101 formed by the first box body 1011 and the second box body 1012 may be in various shapes, such as a cylinder or a cuboid.

In the battery 100, the plurality of battery cells 102 may be connected in series, parallel, or series-parallel. The series-parallel connection means that both series connection and parallel connection exist among the plurality of battery cells 102. The plurality of battery cells 102 may be directly connected in series, parallel, or series-parallel together, and then a whole formed by the plurality of battery cells 102 may be accommodated in the box 101. Certainly, the battery 100 may alternatively be in the form of a plurality of battery modules formed by the plurality of battery cells 102 that are first connected in series, parallel, or series-parallel, and the plurality of battery modules are then connected in series, parallel, or series-parallel to form a whole and accommodated in the box 101. The battery 100 may further include other structures. For example, the battery 100 may further include a bus component, configured to electrically connect the plurality of battery cells 102.

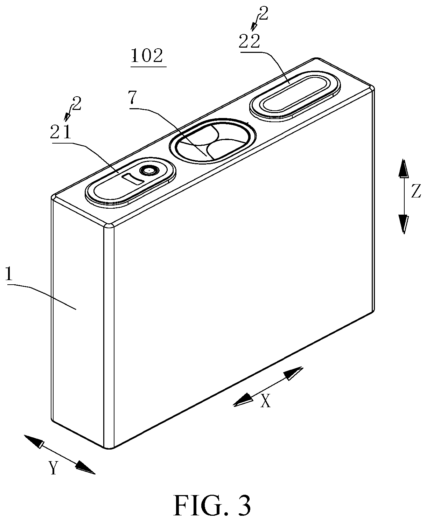

Each battery cell 102 may be a secondary battery or a primary battery; or may be a lithium-sulfur battery, a sodium-ion battery, or a magnesium-ion battery, but is not limited thereto. The battery cell 102 may be cylindrical, flat-shaped, cuboid-shaped, or in another shape. For example, FIG. 3 is a schematic diagram of a structure of a battery cell according to some embodiments of the present application. Referring to the embodiment shown in FIG. 3, a length direction of the battery cell 102 is a first direction X, a width direction of the battery cell 102 is a second direction Y, and a height direction of the battery cell 102 is a third direction Z, where every two of the first direction X, the second direction Y, and the third direction Z are perpendicular to each other.

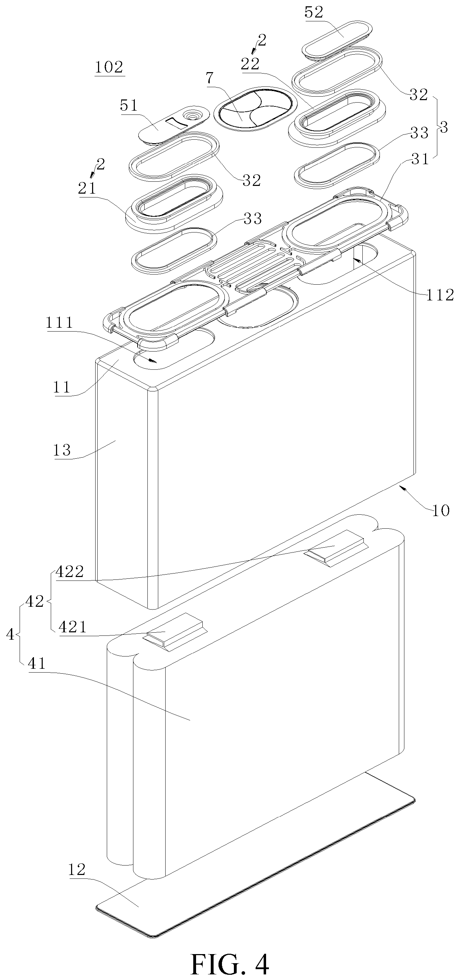

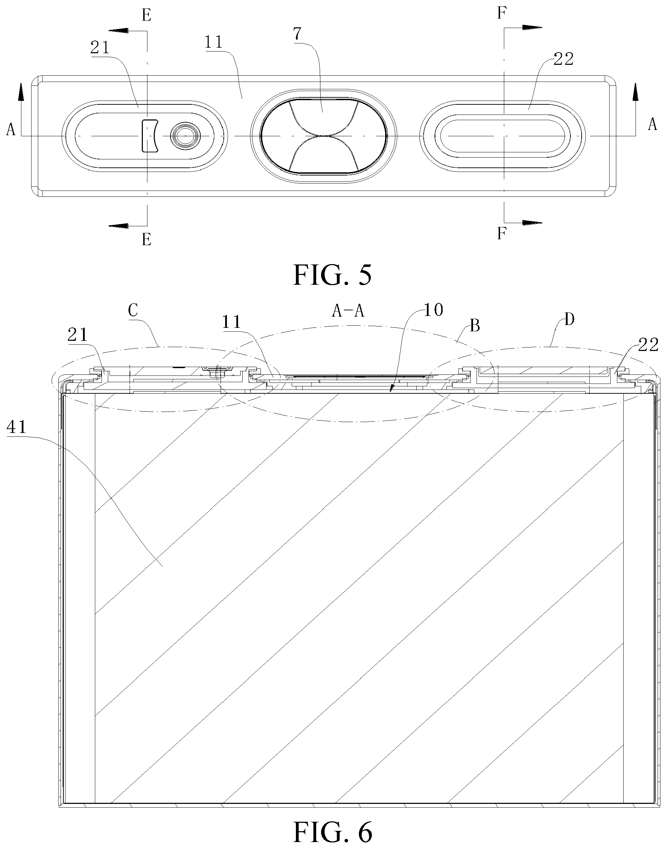

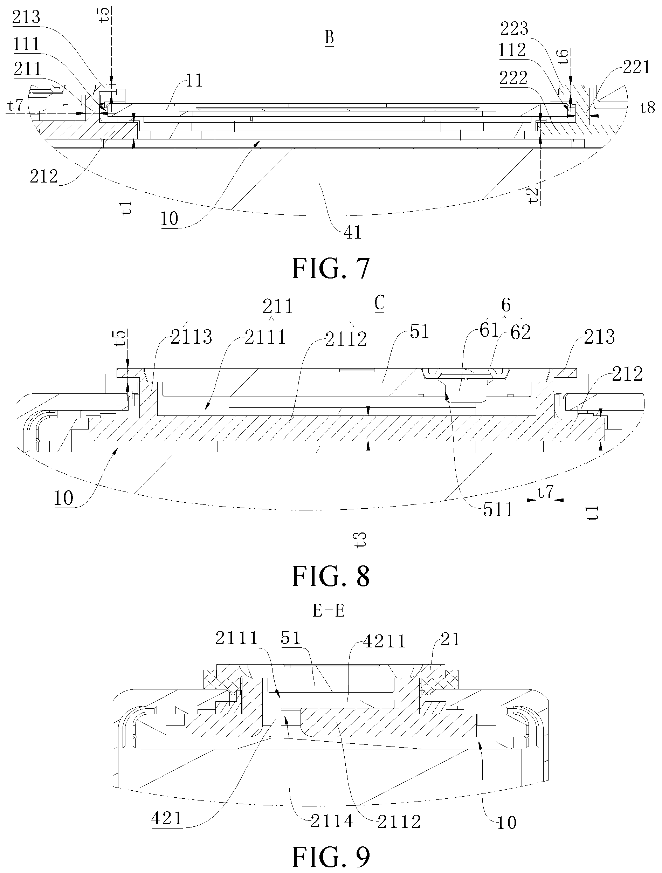

FIG. 4 is an exploded view of the structure of the battery cell 102 shown in FIG. 3. FIG. 5 is a schematic diagram of an orthographic projection of a battery cell 102 according to some embodiments of the present application. FIG. 6 is a cross-sectional view along a line A-A in FIG. 5. FIG. 7 is a partial increased view of a part B circled in FIG. 6. In some embodiments of the present application, with reference to FIG. 3 to FIG. 7, the battery cell 102 includes: a housing 1 and an electrode terminal 2, where the electrode terminal 2 is arranged on the housing 1, and an accommodating cavity 10 is formed inside the housing 1. For example, the battery cell 102 includes a battery core assembly 4, the battery core assembly 4 may include an active substance coating part 41 and a conductive part 42 connected to the active substance coating part 41, the active substance coating part 41 is accommodated in the accommodating cavity 10, and the conductive part 42 is welded to the electrode terminal 2, so that the conductive part 42 is electrically connected between the active substance coating part 41 and the electrode terminal 2. It may be understood that, the active substance coating part 41 may include a current collector coated with an active substance layer, and the conductive part 42 may include only a tab part or may include a tab part and an adapting piece electrically connected to the tab part, which is not limited herein.

With reference to FIG. 3 to FIG. 6, the terminal 2 disposed on the housing 1 includes a first terminal 21 and a second terminal 22. For example, the housing 1 may include a plurality of housing walls, and the first terminal 21 and the second terminal 22 may be disposed on a same housing wall, or may be respectively disposed on different housing walls. For example, the housing 1 may include a first housing wall 11, a second housing wall 12, and a third housing wall 13, the first housing wall 11 is opposite to the second housing wall 12, the third housing wall 13 is connected between the first housing wall 11 and the second housing wall 12, and a cross-sectional shape of the third housing wall 13 is the same as an outline shape of either of the first housing wall 11 and the second housing wall 12. The first terminal 21 and the second terminal 22 are both disposed on the first housing wall 11. Alternatively, the first terminal 21 and the second terminal 22 are both disposed on a same side surface of the third housing wall 13. Alternatively, the first terminal 21 is disposed on the first housing wall 11, and the second terminal 22 is disposed on the second housing wall 12 or the third housing wall 13. Alternatively, the first terminal 21 and the second terminal 22 are respectively disposed on different side surfaces of the third housing wall 13, and so on. To simplify description, descriptions are provided below mainly by using an example in which the first terminal 21 and the second terminal 22 are both disposed on the first housing wall 11. After reading the following technical solutions, a person skilled in the art can obviously understand other technical solutions in which the first terminal 21 and the second terminal 22 are not both disposed on the first housing wall 11.

With reference to FIG. 7 and FIG. 8, the first terminal 21 includes a first threading part 211 threaded through the housing 1, and a first inner fixing part 212 and a first outer fixing part 213 that are connected to the first threading part 211 and arranged on an inner side and an outer side of the housing 1 respectively.

For example, the first terminal 21 includes a first threading part 211, a first inner fixing part 212, and a first outer fixing part 213. The first housing wall 11 has a first mounting hole 111, and the first threading part 211 is threaded through the first mounting hole 111. That is, at least a part of the first threading part 211 is located in the first mounting hole 111. In addition, an axial direction of the first mounting hole 111 is used as a projection direction, and a surface perpendicular to the axial direction of the first mounting hole 111 is used as a projection surface. An orthographic projection of the first threading part 211 on the projection surface falls within an orthographic projection range of the first mounting hole 111 on the projection surface, so that the first threading part 211 can be threaded through the first mounting hole 111.

An orthographic projection of the first inner fixing part 212 on the projection surface and an orthographic projection of the first housing wall 11 on the projection surface have an intersection region, so that a part of the first inner fixing part 212 corresponding to the intersection region directly faces the first housing wall 11, and at least a part of the first inner fixing part 212 directly faces the first housing wall 11, thereby preventing the first terminal 21 from moving toward the first outer fixing part 213 (that is, from moving toward the outer side of the first housing wall 11) relative to the first housing wall 11. An orthographic projection of the first outer fixing part 213 on the projection surface and the orthographic projection of the first housing wall 11 on the projection surface have an intersection region, so that a part of the first outer fixing part 213 corresponding to the intersection region directly faces the first housing wall 11, and at least a part of the first outer fixing part 213 directly faces the first housing wall 11, thereby preventing the first terminal 21 from moving toward the first inner fixing part 212 (that is, from moving toward the inner side of the first housing wall 11) relative to the first housing wall 11.

With reference to FIG. 7 and FIG. 8, the second terminal 22 includes a second threading part 221 threaded through the housing 1, and a second inner fixing part 222 and a second outer fixing part 223 that are connected to the second threading part 221 and arranged on the inner side and the outer side of the housing 1 respectively.

For example, the second terminal 22 includes a second threading part 221, a second inner fixing part 222, and a second outer fixing part 223. The first housing wall 11 has a second mounting hole 112, and the second threading part 221 is threaded through the second mounting hole 112. That is, at least a part of the second threading part 221 is located in the second mounting hole 112. In addition, an axial direction of the second mounting hole 112 is used as a projection direction, and a surface perpendicular to the axial direction of the second mounting hole 112 is used as a projection surface. An orthographic projection of the second threading part 221 on the projection surface falls within an orthographic projection range of the second mounting hole 112 on the projection surface, so that the second threading part 221 can be threaded through the second mounting hole 112.

An orthographic projection of the second inner fixing part 222 on the projection surface and the orthographic projection of the first housing wall 11 on the projection surface have an intersection region, so that a part of the second inner fixing part 222 corresponding to the intersection region directly faces the first housing wall 11, and at least a part of the second inner fixing part 222 directly faces the first housing wall 11, thereby preventing the second terminal 22 from moving toward the second outer fixing part 223 (that is, from moving toward the outer side of the first housing wall 11) relative to the first housing wall 11. An orthographic projection of the second outer fixing part 223 on the projection surface and the orthographic projection of the first housing wall 11 on the projection surface have an intersection region, so that a part of the second outer fixing part 223 corresponding to the intersection region directly faces the first housing wall 11, and at least a part of the second outer fixing part 223 directly faces the first housing wall 11, thereby preventing the second terminal 22 from moving toward the second inner fixing part 222 (that is, from moving toward the inner side of the first housing wall 11) relative to the first housing wall 11.

With reference to FIG. 7 and FIG. 8, a material strength of the first inner fixing part 212 is less than a material strength of the second inner fixing part 222, and a wall thickness t1 of the first inner fixing part 212 is greater than a wall thickness t2 of the second inner fixing part 222. That is, in the first inner fixing part 212 and the second inner fixing part 222, the material strength of the first inner fixing part 212 is relatively small, and the material strength of the second inner fixing part 222 is relatively large. Meanwhile, in the first inner fixing part 212 and the second inner fixing part 222, the wall thickness t1 of the first inner fixing part 212 is relatively large, and the wall thickness t2 of the second inner fixing part 222 is relatively small. Therefore, the first inner fixing part 212 is compared with the second inner fixing part 222, the first inner fixing part 212 has a relatively small material strength and a relatively large wall thickness t1, and the second inner fixing part 222 has a relatively large material strength and a relatively small wall thickness t2.

In this way, when a pressure inside the housing 1 is relatively large, the first inner fixing part 212 having a relatively small material strength and a relatively large wall thickness t1 can reliably abut against the housing 1, to prevent the first terminal 21 from detaching from the first mounting hole 111. That is, a pressure resistance requirement of the first terminal 21 is satisfied, so that the first terminal 21 can be reliably connected to the housing 1. In addition, because the material strength of the second inner fixing part 222 is greater than the material strength of the first inner fixing part 212, when the wall thickness t2 of the second inner fixing part 222 is relatively small relative to the wall thickness t1 of the first inner fixing part 212, a requirement that the second inner fixing part 222 reliably abuts against the housing 1 can also be satisfied. That is, a pressure resistance requirement of the second terminal 22 is satisfied, so that the second terminal 22 can be reliably connected to the housing 1. In addition, because the wall thickness t2 of the second inner fixing part 222 is reduced relative to the wall thickness t1 of the first inner fixing part 212, material costs of the second inner fixing part 222 can be reduced.

As described above, according to the battery cell 102 in this embodiment of the present application, on the premise that a pressure resistance requirement of each of the first terminal 21 and the second terminal 22 is satisfied, because the wall thickness of the second inner fixing part 222 is reduced relative to the wall thickness of the first inner fixing part 212, material costs and weight of the second inner fixing part 222 can be reduced. In addition, because the wall thickness of the second inner fixing part 222 is reduced relative to that of the first inner fixing part 212, the space on the inner side of the second inner fixing part 222 can be released, that is, space inside the housing 1 occupied by the second inner fixing part 222 can be reduced. The saved space can be used to improve an injection amount of the electrolyte, or improve a degree of accommodating gas generated during operation of the battery cell 102, thereby improving performance of the battery cell 102.

For the battery cell 102, a pressure inside the housing 1 is relatively large, and the terminal 2 is easily pressed and detached. Especially, when the area of the terminal 2 is relatively large, the terminal 2 is at a low pressure resistance level, and is more easily pressed by gas inside the housing 1 and detached. In the embodiments of the present application, through setting, the wall thickness of the inner fixing part having a relatively weak material strength is relatively large, so that the housing improves the pressure resistance level of the terminal; and the wall thickness of the inner fixing part having a relatively strong material strength is relatively small, so that material costs can be reduced.

For the battery cell, the inner fixing part of the terminal 2 that is located at the inner side of the housing 1 has a relatively large thickness. In this case, in an axial direction of the terminal 2, a relatively large height space of the accommodating cavity 10 is occupied, so that the height of the battery core assembly 4 in the housing 1 is reduced, affecting the capacity of the battery cell 102. If the first inner fixing part 212 having a relatively weak material strength can satisfy the pressure resistance level, the second inner fixing part 222 having a relatively strong material strength can also satisfy the pressure resistance level when having the wall thickness equal to or less than that of the first inner fixing part 212. Therefore, the capacity of the battery cell 102 may be determined by the wall thickness of the first inner fixing part 212 having a relatively weak material strength. In the embodiments of the present application, the wall thickness of the second inner fixing part 222 is set to be less than the wall thickness of the first inner fixing part 212, so that the second inner fixing part 222 can be thinned without affecting the capacity of the battery cell 102 and the pressure resistance level of the second terminal 22, thereby reducing material costs and weight of the second terminal 22.

In some embodiments of the present application, as shown in FIG. 6 and FIG. 8, the first threading part 211 defines a first accommodating slot 2111, the first accommodating slot 2111 is open toward the inner side or the outer side of the housing 1, and the first threading part 211 includes a first end wall part 2112 disposed opposite to an open mouth of the first accommodating slot 2111. It may be understood that if the first accommodating slot 2111 is open toward the inner side of the housing 1, the first end wall part 2112 is located on a side of the first accommodating slot 2111 away from the accommodating cavity 10. For example, when the first accommodating slot 2111 is open toward a lower side, the first end wall part 2112 forms a top wall of the first accommodating slot 2111. However, if the first accommodating slot 2111 is open toward an outer side of the housing 1, the first end wall part 2112 is located on a side of the first accommodating slot 2111 close to the accommodating cavity 10. For example, when the first accommodating slot 2111 is open toward an upper side, the first end wall part 2112 forms a bottom wall of the first accommodating slot 2111. In addition, the first threading part 211 may further define two first accommodating slots 2111 disposed back to back, one of the two first accommodating slots 2111 that is relatively close to the accommodating cavity 10 is open toward the inner side of the housing 1, and one of the two first accommodating slots 2111 that is relatively far away from the accommodating cavity 10 is open toward the outer side of the housing 1.

Therefore, because the first accommodating slot 2111 is disposed on the first threading part 211 of the first terminal 21, to enable the first terminal 21 to be in a hollow form, a material use amount of the first terminal 21 can be reduced while increasing the surface area of the first terminal 21, thereby reducing material costs and weight of the first terminal 21. In addition, it may be understood that the terminal 2 is electrically connected between the conductive part 42 and the bus component. When the surface area of the first terminal 21 is increased, the area of the electrical connection between the first terminal 21 and the first conductive part 421 is increased, thereby facilitating improvement in the overcurrent efficiency.

For example, with reference to FIG. 8, a host material of the first inner fixing part 212 is the same as that of the first end wall part 2112, and a wall thickness t3 of the first end wall part 2112 is greater than the wall thickness t1 of the first inner fixing part 212. In this way, because the material strength of the first inner fixing part 212 is relatively weak, the material strength of the first end wall part 2112 is also relatively weak. Because the first end wall part 2112 is opposite to the first accommodating slot 2111, setting the wall thickness t3 of the first end wall part 2112 to be greater than the wall thickness t1 of the first inner fixing part 212 can improve the structural strength and the pressure resistance level of the first end wall part 2112. For example, the host material of the first inner fixing part 212 and the host material of the first end wall part 2112 are both aluminum. The "host material" described in this specification may be understood as follows: When being composed of only one material, the material is the host material. When being composed of an alloy or a plurality of materials, a component having a largest content is the host material.

For example, when an axial direction of the first mounting hole 111 is used as a projection direction, a surface perpendicular to the axial direction of the first mounting hole 111 is used as a projection surface, and an area of an orthographic projection of the first inner fixing part 212 on the projection surface is less than an area of an orthographic projection of the first end wall part 2112 on the projection surface, setting the wall thickness of the first end wall part 2112 to be greater than the wall thickness of the first inner fixing part 212 can improve the structural strength of the first end wall part 2112 having a relatively large area.

In short, setting the wall thickness of the first end wall part 2112 of the first terminal 21 (briefly referred to as a center of the first terminal 21) to be greater than the wall thickness of the first inner fixing part 212 (briefly referred to as an edge of the first terminal 21) is equivalent to increasing the wall thickness at the center of the first terminal 21 while satisfying the pressure resistance level at the edge of the first terminal 21, so that when the area at the center of the first terminal 21 is relatively large, a good structural strength can be exhibited, and reliability of the first terminal 21 can be improved. Alternatively, setting the wall thickness of the first inner fixing part 212 (that is, at the edge of the first terminal 21) to be less than the wall thickness of the first end wall part 2112 of the first terminal 21 (that is, at the center of the first terminal 21) is equivalent to reducing the wall thickness at the edge of the first terminal 21 while satisfying the structural strength at the center of the first terminal 21, so that materials can be saved, costs and weight can be reduced, occupation of the height space in the housing 1 at the edge of the first terminal 21 can be reduced, and capacity of the battery cell 102 can be improved.

For example, as shown in FIG. 8 and FIG. 9, a first through-hole 2114 connecting the inner side (that is, the accommodating cavity 10) of the housing 1 and the first accommodating slot 2111 is formed on the first end wall part 2112, a battery core assembly 4 of the battery cell 102 includes a first conductive part 421 electrically connected to the first terminal 21, the first conductive part 421 is threaded through the first through-hole 2114 and includes a first connection segment 4211 received in the first accommodating slot 2111, and the first connection segment 4211 is overlapped to the first end wall part 2112 and is welded to the first end wall part 2112. The welding manner is not limited, and may be, for example, laser welding.

Therefore, by disposing the first through-hole 2114 to enable the first conductive part 421 to extend into the first accommodating slot 2111, the first accommodating slot 2111 may function to receive the first conductive part 421, thereby reducing occupation of the height space of the accommodating cavity 10 by the first conductive part 421, and improving the capacity of the battery cell 102. In addition, when the first accommodating slot 2111 is open toward the outer side of the housing 1, it is convenient to weld the first connection segment 4211 and the first end wall part 2112 from the outer side of the housing 1, thereby reducing the processing difficulty.

In the foregoing technical solution, the wall thickness of the first end wall part 2112 of the first terminal 21 is greater than the wall thickness of the first inner fixing part 212, so that on the premise that a pressure resistance level of the first terminal 21 at the edge is sufficient, the welding depth of fusion between the first connection segment 4211 and the first end wall part 2112 satisfies a requirement, which is beneficial to improving the welding connection strength between the first end wall part 2112 and the first connection segment 4211, thereby improving the reliability and stability of the electrical connection between the first terminal 21 and the first conductive part 421.

The inner fixing part of the terminal 2 that is located at the inner side of the housing 1 has a relatively large thickness. In this case, in an axial direction of the terminal 2, a relatively large height space of the accommodating cavity 10 is occupied, so that the height of the battery core assembly 4 in the housing 1 needs to be reduced, affecting the capacity of the battery cell 102. For the first terminal 21 having a relatively weak material strength, by setting unequal thicknesses at the edge and the center of the first terminal 21, the wall thickness of the first inner fixing part 212 is set to be less than the wall thickness of the first end wall part 2112, so that the relatively thick first end wall part 2112 can be strengthened, to satisfy the welding depth of fusion and the structural strength. In addition, the relatively thin first inner fixing part 212 is thinned relative to the first end wall part 2112, thereby reducing the occupation of the height space of the accommodating cavity 10, improving the capacity of the battery cell 102, and reducing the material costs and weight while satisfying the pressure resistance level.

In some embodiments, as shown in FIG. 8 and FIG. 9, the first end wall part 2112 is disposed close to the inner side (that is, the accommodating cavity 10) of the housing 1 relative to the first accommodating slot 2111, and an inner end surface of the first inner fixing part 212 (that is, a side surface close to the accommodating cavity 10) is flush with an inner end surface of the first end wall part 2112 (that is, a side surface close to the accommodating cavity 10). For example, the first terminal 21 is disposed at the top of the housing 1. The first accommodating slot 2111 is open upward. The first end wall part 2112 forms a bottom wall of the first accommodating slot 2111. A lower surface of the first inner fixing part 212 is flush with a lower surface of the first end wall part 2112.

In the foregoing technical solution, by setting a side surface of the first inner fixing part 212 that is close to the accommodating cavity 10 to be flush with a side surface of the first end wall part 2112 that is close to the accommodating cavity 10, processing of the first terminal 21 can be simplified, processing difficulty can be reduced, and production costs can be reduced. In addition, because the inner end surface of the first end wall part 2112 does not protrude from the inner end surface of the first inner fixing part 212 toward the accommodating cavity 10, occupation of the height space in the housing 1 at the center of the first terminal 21 is reduced, and a risk that the first terminal 21 is short-circuited to the battery core assembly 4 is reduced.

In some embodiments, with reference to FIG. 8, on the premise that the wall thickness t3 of the first end wall part 2112 is greater than the wall thickness t1 of the first inner fixing part 212, both the first end wall part 2112 and the first inner fixing part 212 are made of aluminum. A value of the wall thickness t3 of the first end wall part 2112 may range from 2.2 mm to 0.8 mm, for example, 2.2 mm, 2.0 mm, 1.8 mm, 1.6 mm, 1.4 mm, 1.2 mm, 1.0 mm, or 0.8 mm. A value of the wall thickness t1 of the first inner fixing part 212 may range from 2 mm to 0.8 mm, for example, 2.0 mm, 1.8 mm, 1.6 mm, 1.4 mm, 1.2 mm, 1.0 mm, or 0.8 mm.

Therefore, the wall thickness t3 of the first end wall part 2112 is not excessively large, so that the volume of the first accommodating slot 2111 is not excessively small, and a receiving requirement for the first conductive part 421 is satisfied. The wall thickness t3 of the first end wall part 2112 is not excessively small, so that the first end wall part 2112 can satisfy a requirement for the welding depth of fusion between the first end wall part and the first conductive part 421 and a requirement for the structural strength of the first end wall part 2112. The wall thickness t1 of the first inner fixing part 212 is not excessively large, so that occupation of the height space of the accommodating cavity 10 by the first inner fixing part 212 is reduced, the capacity of the battery cell 102 is improved, and material costs can be reduced. The wall thickness t1 of the first inner fixing part 212 is not excessively small, so that the pressure resistance level of the first terminal 21 is satisfied, to alleviate a problem that a large pressure inside the housing 1 causes the first terminal 21 to detach from the housing 1.

Specifically, the wall thickness of the first end wall part 2112 and the wall thickness of the first inner fixing part 212 may be specifically set and selected according to a system capacity and the like of the battery cell 102. For example, the wall thickness of the first end wall part 2112 is 2.2 mm, and the wall thickness of the first inner fixing part 212 is 2 mm, so that a receiving requirement for the first conductive part 421 can be better satisfied, and the first end wall part 2112 can satisfy a requirement for the welding depth of fusion between the first end wall part and the first conductive part 421 and a requirement for the structural strength of the first end wall part 2112. In addition, the first inner fixing part 212 occupies a small height space of the accommodating cavity 10, thereby improving the capacity of the battery cell 102, reducing material costs and weight, satisfying the pressure resistance level of the first terminal 21, and alleviating a problem that a large pressure inside the housing 1 causes the first terminal 21 to detach from the housing 1.

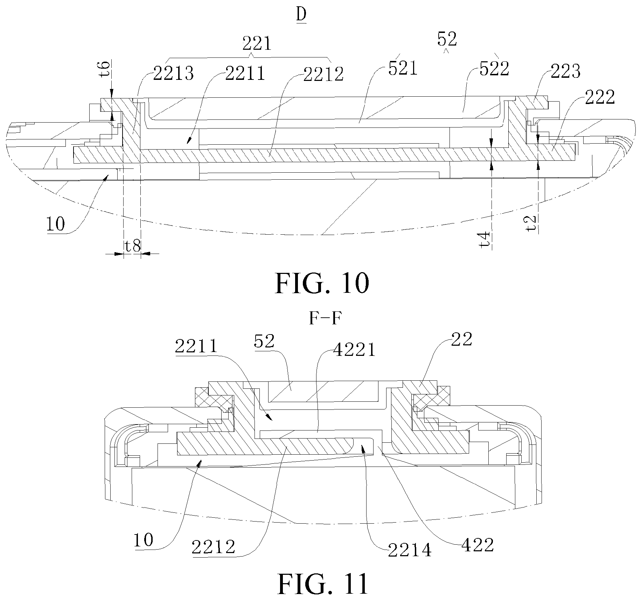

In some embodiments of the present application, as shown in FIG. 6 and FIG. 10, the second threading part 221 defines a second accommodating slot 2211, the second accommodating slot 2211 is open toward the inner side or the outer side of the housing 1, and the second threading part 221 includes a second end wall part 2212 disposed opposite to an open mouth of the second accommodating slot 2211. It may be understood that if the second accommodating slot 2211 is open toward the inner side of the housing 1, the second end wall part 2212 is located on a side of the second accommodating slot 2211 away from the accommodating cavity 10. For example, when the second accommodating slot 2211 is open toward a lower side, the second end wall part 2212 forms a top wall of the second accommodating slot 2211. However, if the second accommodating slot 2211 is open toward an outer side of the housing 1, the second end wall part 2212 is located on a side of the second accommodating slot 2211 close to the accommodating cavity 10. For example, when the second accommodating slot 2211 is open toward an upper side, the second end wall part 2212 forms a bottom wall of the second accommodating slot 2211. In addition, the second threading part 221 may further define two second accommodating slots 2211 disposed back to back, one of the two second accommodating slots 2211 that is relatively close to the accommodating cavity 10 is open toward the inner side of the housing 1, and one of the two second accommodating slots 2211 that is relatively far away from the accommodating cavity 10 is open toward the outer side of the housing 1.

Therefore, because the second accommodating slot 2211 is disposed on the second threading part 221 of the second terminal 22, to enable the second terminal 22 to be in a hollow form, a material use amount of the second terminal 22 can be reduced while increasing the surface area of the second terminal 22, thereby reducing material costs and weight of the second terminal 22. In addition, it may be understood that the terminal 2 is electrically connected between the conductive part 42 and the bus component. When the surface area of the second terminal 22 is increased, the area of the electrical connection between the second terminal 22 and the second conductive part 422 is increased, thereby facilitating improvement in the overcurrent efficiency.

For example, with reference to FIG. 10, a host material of the second inner fixing part 222 is the same as that of the second end wall part 2212, and a wall thickness t4 of the second end wall part 2212 is less than the wall thickness t2 of the second inner fixing part 222. In this way, because the material strength of the second inner fixing part 222 is relatively strong, the material strength of the second end wall part 2212 is also relatively strong. The wall thickness t4 of the second end wall part 2212 is set to be less than the wall thickness t2 of the second inner fixing part 222, so that the wall thickness of the second inner fixing part 222 is relatively large to satisfy the pressure resistance level of the second terminal 22, and the wall thickness of the second end wall part 2212 is relatively small to increase the volume of the second accommodating slot 2211, thereby reducing the material costs and weight of the second terminal 22. For example, the host material of the second inner fixing part 222 and the host material of the second end wall part 2212 are both copper.

In short, setting the wall thickness of the second end wall part 2212 of the second terminal 22 (briefly referred to as a center of the second terminal 22) to be less than the wall thickness of the second inner fixing part 222 (briefly referred to as an edge of the second terminal 22) is equivalent to reducing the wall thickness at the center of the second terminal 22 having a relatively large material strength while satisfying the pressure resistance level at the edge of the second terminal 22, and reducing the material costs and weight of the second terminal 22 and increasing the volume of the second accommodating slot 2211 while satisfying the structural strength at the center of the second terminal 22. Alternatively, setting the wall thickness of the second inner fixing part 222 (that is, at the edge of the second terminal 22) to be greater than the wall thickness of the second end wall part 2212 of the second terminal 22 (that is, at the center of the second terminal 22) is equivalent to increasing the wall thickness of the edge of the second terminal 22 while satisfying the structural strength of the center of the second terminal 22, thereby improving the pressure resistance level of the second terminal 22.

When the first terminal 21 and the second terminal 22 are disposed on the same side wall of the housing 1, even if the wall thickness of the second inner fixing part 222 is increased, because the wall thickness of the second inner fixing part 222 is less than the wall thickness of the first inner fixing part 212, occupation of the height space in the housing 1 is not increased, thereby ensuring the capacity of the battery cell 102.

For example, as shown in FIG. 10 and FIG. 11, a second through-hole 2214 connecting the inner side (that is, the accommodating cavity 10) of the housing 1 and the second accommodating slot 2211 is formed on the second end wall part 2212, the battery core assembly 4 of the battery cell 102 includes a second conductive part 422 of the second terminal 22, the second conductive part 422 is threaded through the second through-hole 2214 and includes a second connection segment 4221 received in the second accommodating slot 2211, and the second connection segment 4221 is overlapped to the second end wall part 2212 and is welded to the second end wall part 2212. The welding manner is not limited, and may be, for example, laser welding.

Therefore, by disposing the second through-hole 2214 to enable the second conductive part 422 to extend into the second accommodating slot 2211, the second accommodating slot 2211 may function to receive the second conductive part 422, thereby reducing occupation of the height space of the accommodating cavity 10 by the second conductive part 422, and improving the capacity of the battery cell 102. In addition, when the second accommodating slot 2211 is open toward the outer side of the housing 1, it is convenient to weld the second connection segment 4221 and the second end wall part 2212 from the outer side of the housing 1, thereby reducing the processing difficulty.

In the foregoing technical solution, the wall thickness of the second end wall part 2212 of the second terminal 22 is less than the wall thickness of the second inner fixing part 222, so that on the premise that the pressure resistance level of the second terminal 22 at the edge is sufficient, the volume of the second accommodating slot 2211 at the center of the second terminal 22 can be increased, to help receive the second conductive part 422 to a larger extent, and facilitate welding between the second connection segment 4221 and the second end wall part 2212.

The inner fixing part of the terminal 2 that is located at the inner side of the housing 1 has a relatively large thickness. In this case, in an axial direction of the terminal 2, a relatively large height space of the accommodating cavity 10 is occupied, so that the height of the battery core assembly 4 in the housing 1 needs to be reduced, affecting the capacity of the battery cell 102. For the second terminal 22 having a relatively strong material strength, the capacity of the battery cell 102 may be determined by the first terminal 21 having a relatively weak material strength. Therefore, by setting unequal thicknesses at the edge and the center of the second terminal 22, the wall thickness of the second inner fixing part 222 is set to be greater than the wall thickness of the second end wall part 2212 and less than the wall thickness of the first inner fixing part 212, so that on the premise of ensuring the capacity of the battery cell 102, the second inner fixing part 222 is thickened relative to the second end wall part 2212, to improve a pressure resistance level of the second terminal 22, and the second end wall part 2212 is thinned relative to the second inner fixing part 222, to help to increase the volume of the second accommodating slot 2211 and reduce material costs while ensuring the structural strength of the second end wall part 2212.

If the second end wall part 2212 and the second inner fixing part 222 have equal thicknesses and are both relatively thin, the second inner fixing part 222 is equivalent to a cantilever beam, has a relatively large bending moment, and deforms obviously during simulated aeration. By setting the wall thickness of the second inner fixing part 222 to be greater than the wall thickness of the second end wall part 2212, the thickened second fixing part can be used to increase the pressure resistance level of the second terminal 22.

In some embodiments, as shown in FIG. 10 and FIG. 11, the second end wall part 2212 is disposed close to the inner side (that is, the accommodating cavity 10) of the housing 1 relative to the second accommodating slot 2211, and an inner end surface of the second inner fixing part 222 (that is, a side surface close to the accommodating cavity 10) is flush with an inner end surface of the second end wall part 2212 (that is, a side surface close to the accommodating cavity 10). For example, the second terminal 22 is disposed at the top of the housing 1. The second accommodating slot 2211 is open upward. The second end wall part 2212 forms a bottom wall of the second accommodating slot 2211. A lower surface of the second inner fixing part 222 is flush with a lower surface of the second end wall part 2212.

In the foregoing technical solution, by setting a side surface of the second inner fixing part 222 that is close to the accommodating cavity 10 to be flush with a side surface of the second end wall part 2212 that is close to the accommodating cavity 10, processing of the second terminal 22 can be simplified, processing difficulty can be reduced, and production costs can be reduced. In addition, because the inner end surface of the second end wall part 2212 does not protrude from the inner end surface of the second inner fixing part 222 toward the accommodating cavity 10, occupation of the height space in the housing 1 at the center of the second terminal 22 is reduced, and a risk that the second terminal 22 is short-circuited to the battery core assembly 4 is reduced.

In some embodiments, with reference to FIG. 10, on the premise that the wall thickness t4 of the second end wall part 2212 is less than the wall thickness t2 of the second inner fixing part 222, both the second end wall part 2212 and the second inner fixing part 222 are made of copper. A value of the wall thickness t4 of the second end wall part 2212 may range from 1.3 mm to 0.8 mm, for example, 1.3 mm, 1.2 mm, 1.1 mm, 1.0 mm, 0.9 mm, or 0.8 mm. A value of the wall thickness t2 of the second inner fixing part 222 may range from 1.6 mm to 0.8 mm, for example, 1.6 mm, 1.5 mm, 1.4 mm, 1.3 mm, 1.2 mm, 1.1 mm, 1.0 mm, 0.9 mm, or 0.8 mm.

Therefore, the wall thickness t4 of the second end wall part 2212 is not excessively large, so that the volume of the second accommodating slot 2211 is relatively large, a receiving requirement for the second conductive part 422 is increased, and material costs are relatively low. The wall thickness t4 of the second end wall part 2212 is not excessively small, so that the second end wall part 2212 can satisfy a requirement for the welding depth of fusion between the second end wall part and the second conductive part 422 and a requirement for the structural strength of the second end wall part 2212. The wall thickness t2 of the second inner fixing part 222 is not excessively large, so that occupation of the height space of the accommodating cavity 10 by the second inner fixing part 222 is reduced, the capacity of the battery cell 102 is improved, and material costs can be reduced. The wall thickness t2 of the second inner fixing part 222 is not excessively small, so that the pressure resistance level of the second terminal 22 is satisfied, to alleviate a problem that a large pressure inside the housing 1 causes the second terminal 22 to detach from the housing 1.

Specifically, the wall thickness of the second end wall part 2212 and the wall thickness of the second inner fixing part 222 may be specifically set and selected according to a system capacity and the like of the battery cell 102. For example, the wall thickness t4 of the second end wall part 2212 is 1.2 mm, and the wall thickness t2 of the second inner fixing part 222 is 1.5 mm, so that a receiving requirement for the second conductive part 422 can be better satisfied, and the second end wall part 2212 can satisfy a requirement for the welding depth of fusion between the second end wall part and the second conductive part 422 and a requirement for the structural strength of the second end wall part 2212. In addition, material costs and weight of the second end wall part 2212 are reduced, and the second inner fixing part 222 occupies a small height space of the accommodating cavity 10, thereby improving the capacity of the battery cell 102, reducing material costs, satisfying the pressure resistance level of the second terminal 22, and alleviating a problem that a large pressure inside the housing 1 causes the second terminal 22 to detach from the housing 1.

In some embodiments, with reference to FIG. 7, FIG. 8, and FIG. 10, the first threading part 211 defines the first accommodating slot 2111, the first accommodating slot 2111 is open toward the inner side or the outer side of the housing 1, the first threading part 211 includes the first end wall part 2112 disposed opposite to an open mouth of the first accommodating slot 2111, the second threading part 221 defines the second accommodating slot 2211, the second accommodating slot 2211 is open toward the inner side or the outer side of the housing 1, and the second threading part 221 includes the second end wall part 2212 disposed opposite to an open mouth of the second accommodating slot 2211. For a relative positional relationship between the first accommodating slot 2111 and the first end wall part 2112, refer to the foregoing descriptions. For a relative positional relationship between the second accommodating slot 2211 and the second end wall part 2212, refer to the foregoing descriptions. Details are not described herein.

In this embodiment, the material strength of the first end wall part 2112 is less than the material strength of the second end wall part 2212, and the wall thickness t3 of the first end wall part 2112 is greater than the wall thickness t4 of the second end wall part 2212. In this way, the material strength of the first end wall part 2112 is less than the material strength of the second end wall part 2212, and if the first end wall part 2112 is not easy to deform during simulated aeration, the second end wall part 2212 is not easy to deform even when the wall thickness of the second end wall part is less than the wall thickness of the first end wall part 2112. Therefore, setting the wall thickness of the second end wall part 2212 to be small relative to the wall thickness of the first end wall part 2112 can effectively increase the volume of the second accommodating slot 2211, and reduce material costs and weight of the second terminal 22.

In some embodiments, as shown in FIG. 6 and FIG. 7, a material strength of the first outer fixing part 213 is less than a material strength of the second outer fixing part 223, and a wall thickness t5 of the first outer fixing part 213 is greater than a wall thickness t6 of the second outer fixing part 223. In this way, the material strength of the first outer fixing part 213 is less than the material strength of the second outer fixing part 223, and when the wall thickness of the first outer fixing part 213 enables the structural strength of the first outer fixing part 213 to satisfy a requirement, the structural strength of the second outer fixing part 223 can also satisfy a requirement by setting the wall thickness of the second outer fixing part 223 to be less than the wall thickness of the first outer fixing part 213. Therefore, thinning the second outer fixing part 223 relative to the first outer fixing part 213 can reduce material costs and weight of the second terminal 22 while satisfying the requirement for the structural strength.

For example, both the second outer fixing part 223 and the first outer fixing part 213 may be fixed to the housing 1 through riveting. That is, forms of the first outer fixing part 213 are different before and after the riveting. Before the riveting, the first outer fixing part 213 is disposed corresponding to the first mounting hole 111, but after the riveting, the first outer fixing part 213 extends away from a central axis of the first mounting hole 111 and abuts against the outer side of the housing 1. Similarly, forms of the second outer fixing part 223 are different before and after the riveting. Before the riveting, the second outer fixing part 223 is disposed corresponding to the second mounting hole 112, but after the riveting, the second outer fixing part 223 extends away from a central axis of the second mounting hole 112 and abuts against the outer side of the housing 1.

When the material strength of the first outer fixing part 213 is set to be less than the material strength of the second outer fixing part 223, the wall thickness t5 of the first outer fixing part 213 is greater than the wall thickness t6 of the second outer fixing part 223. When the wall thickness of the first outer fixing part 213 enables the abutment reliability of the first outer fixing part 213 to satisfy a requirement, the abutment reliability of the second outer fixing part 223 can also satisfy a requirement by setting the wall thickness of the second outer fixing part 223 to be less than the wall thickness of the first outer fixing part 213. In addition, material costs and weight of the second terminal 22 can be reduced.

In some embodiments, with reference to FIG. 4, FIG. 7, FIG. 8, and FIG. 10, the housing 1 has a first mounting hole 111 through which the first threading part 211 is threaded, the first threading part 211 includes a first surrounding wall part 2113 extending along a peripheral direction of the first mounting hole 111, and the first accommodating slot 2111 is formed in the first surrounding wall part 2113. That is, the first surrounding wall part 2113 and the first end wall part 2112 jointly define the first accommodating slot 2111. The housing 1 has a second mounting hole 112 through which the second threading part 221 is threaded, the second threading part 221 includes a second surrounding wall part 2213 extending along a peripheral direction of the second mounting hole 112, and the second accommodating slot 2211 is formed in the second surrounding wall part 2213. That is, the second surrounding wall part 2213 and the second end wall part 2212 jointly define the second accommodating slot 2211. A material strength of the first surrounding wall part 2113 is less than a material strength of the second surrounding wall part 2213, and a wall thickness t7 of the first surrounding wall part 2113 is greater than a wall thickness t8 of the second surrounding wall part 2213.

In this way, the material strength of the first surrounding wall part 2113 is less than the material strength of the second surrounding wall part 2213, and when the wall thickness of the first surrounding wall part 2113 enables the structural strength of the first surrounding wall part 2113 to satisfy a requirement, the structural strength of the second surrounding wall part 2213 can also satisfy a requirement by setting the wall thickness of the second surrounding wall part 2213 to be less than the wall thickness of the first surrounding wall part 2113. Therefore, thinning the second surrounding wall part 2213 relative to the first surrounding wall part 2113 can reduce material costs and weight of the second terminal 22 while satisfying the requirement for the structural strength, and can increase the volume of the second accommodating slot 2211, and increase the area of the second end wall part 2212, which helps to increase the area of welding between the second end wall part 2212 and the second conductive part 422 and improve the overcurrent capability.

In some embodiments, the first terminal 21 is an integral member having a same host material everywhere, the second terminal 22 is an integral member having a same host material everywhere, and a material strength of the second terminal 22 is greater than a material strength of the first terminal 21. Processing difficulty and manufacturing costs of the first terminal 21 can be reduced, and processing difficulty and manufacturing costs of the second terminal 22 can be reduced. In addition, it can be easily achieved that material strengths everywhere of the second terminal 22 are greater than material strengths everywhere of the first terminal 21, so that the wall thickness of the second terminal 22 can be reduced to a larger extent, thereby further facilitating reduction of material costs and weight of the second terminal 22.

For example, the first terminal 21 is a positive terminal, the host material of the first terminal 21 is aluminum, the second terminal 22 is a negative terminal, and the host material of the second terminal 22 is copper. That is, aluminum may be selected as the host material of the positive terminal, and copper may be selected as the host material of the negative terminal. Because the material strength of aluminum is low relative to the material strength of copper, or the material strength of copper is high relative to the material strength of aluminum, the requirement that the material strength of the negative terminal is greater than the material strength of the positive terminal can be satisfied, which helps reduce the material costs and weight of the negative terminal.

For example, when the first terminal 21 is a positive terminal, the host material of the first terminal 21 is aluminum, the second terminal 22 is a negative terminal, and the host material of the second terminal 22 is copper, the first accommodating slot 2111 corresponding to the first end wall part 2112 of the positive terminal having a relatively weak material strength is easily deformed during simulated aeration, the thickness of the first end wall part 2112 cannot be excessively small, and the depth of fusion of welding between the first end wall part 2112 and the first conductive part 421 needs to be relatively large to satisfy a welding requirement. However, the material strength of the negative terminal is relatively strong, and even if the wall thickness of the second end wall part 2212 of the negative terminal is less than the wall thickness of the first end wall part 2112 of the positive terminal, the second end wall part is not easy to deform, and the second end wall part 2212 can also satisfy a requirement for welding with the second conductive part 422. In addition, the thickness of the first inner fixing part 212 of the positive terminal having a relatively weak material strength needs to be relatively large to satisfy the pressure resistance level. Therefore, the thickness of the first inner fixing part 212 directly determines the capacity of the battery cell 102. Therefore, the thickness of the first inner fixing part 212 cannot be excessively large. Based on the foregoing consideration, in some embodiments of the present application, the wall thickness of the first end wall part 2112 of the positive terminal is set to be greater than the wall thickness of the first inner fixing part 212, so that deformation of the first end wall part 2112 can be reduced, the depth of fusion of the welding between the first end wall part 2112 and the first conductive part 421 can be increased, and the thickness of the first inner fixing part 212 can be reduced, to increase the capacity of the battery cell 102 and reduce costs; and by setting the wall thickness of the second end wall part 2212 of the negative terminal to be less than the wall thickness of the second inner fixing part 222, and the wall thickness of the second inner fixing part 222 to be less than the wall thickness of the first inner fixing part 212, material costs and weight of the second terminal 22 can be reduced, and the volume of the second accommodating slot 2211 can be increased while ensuring the structural strength and the pressure resistance level of the second terminal 22.

In some embodiments, as shown in FIG. 8 and FIG. 10, a first terminal cover plate 51 is externally welded to the first terminal 21, the first terminal cover plate 51 is an aluminum cover plate and is suitable for being welded to a bus component, a second terminal cover plate 52 is externally welded to the second terminal 22, the second terminal cover plate 52 is a copper aluminum composite cover plate and is welded to the second terminal 22 by using a copper part 521, and an aluminum part 522 of the second terminal cover plate 52 is suitable for being welded to the bus component.

In the foregoing technical solution, the first terminal cover plate 51 and the first terminal 21 may be subject to aluminum-to-aluminum welding, thereby facilitating welding between the first terminal cover plate 51 and the first terminal 21, and the second terminal cover plate 52 and the second terminal 22 may be subject to copper-to-copper welding, thereby facilitating welding between the second terminal cover plate 52 and the second terminal 22. In addition, the bus component is usually made of aluminum, so that the first terminal cover plate 51 and the bus component may be subject to aluminum-to-aluminum welding, thereby facilitating welding between the first terminal cover plate 51 and the bus component, and the second terminal cover plate 52 and the bus component may also be subject to aluminum-to-aluminum welding, thereby facilitating welding between the second terminal cover plate 52 and the bus component.

In some embodiments, as shown in FIG. 3 to FIG. 5, the housing 1 includes a first housing wall 11, and the first terminal 21 and the second terminal 22 are both disposed on the first housing wall 11. Therefore, processing can be simplified, processing difficulty can be reduced, and processing efficiency can be improved. In addition, an axial direction of the first terminal 21 and an axial direction of the second terminal 22 are consistent and are both the height direction of the battery cell 102. The first inner fixing part 212 and the second inner fixing part 222 both occupy height spaces on the same side in the housing 1, and the height spaces occupied by the two parts have an overlapping part. Compared with disposing the first terminal 21 and the second terminal 22 respectively on opposite sides, occupation of the height space in the housing 1 can be reduced, which is beneficial to improving the capacity of the battery.

According to an embodiment of a second aspect of the present application, an embodiment of the present application further provides a battery 100, including the battery cell 102 according to any one of the foregoing solutions. It should be noted that, the battery 100 according to the embodiments of the present application may include a box 101 or may not include a box 101. Therefore, the battery cell 102 according to the embodiments of the present application has the reliability improved and the costs reduced, so that the performance of the battery 100 is improved, and the costs of the battery 100 are reduced.

For example, the battery may further include a bus component, and there are a plurality of battery cells 102 and at least two battery cells are electrically connected through the bus component. Therefore, the plurality of battery cells 102 may be connected in series and/or in parallel. For example, when the plurality of battery cells 102 are connected in series, a positive electrode terminal cover plate of one battery cell 102 is connected to a negative electrode terminal cover plate of a next battery cell 102 through a bus component, and a negative electrode terminal cover plate of the battery cell 102 is connected to a positive electrode terminal cover plate of a previous battery cell 102 through another bus component.

According to an embodiment of a third aspect of the present application, an embodiment of the present application further provides a power consuming apparatus, including the battery 100 according to any one of the foregoing solutions, where the battery 100 is configured to provide electric energy for the power consuming apparatus. The power consuming apparatus may be any one of the foregoing devices or systems to which the battery is applicable, for example, the vehicle 1000. The performance of the battery 100 is improved, so that the operating power consuming performance of the power consuming apparatus is improved. In addition, because the costs of the battery 100 are reduced, the costs of the power consuming apparatus are reduced.

The following describes a battery cell 102 according to a specific embodiment of the present application.

The battery cell 102 includes a housing 1, a first terminal 21, and a second terminal 22. The housing 1 includes a first housing wall 11, and the first terminal 21 and the second terminal 22 are both disposed on the first housing wall 11. The first terminal 21 is an aluminum positive terminal, and the second terminal 22 is a copper negative terminal. In addition, a pressure relief structure 7 located between the first terminal 21 and the second terminal 22 is further disposed on the first housing wall 11. A sealing insulated assembly 3 is disposed between each of the first terminal 21 and the second terminal 22, and the first housing wall 11, and the sealing insulated assembly 3 includes: a first insulated member 31 located at an inner side of the first housing wall 11, a second insulated member 32 located at an outer side of the first housing wall 11, and a sealing ring 33 located at the inner side of the first housing wall 11.

The first terminal 21 includes a first threading part 211 arranged on the housing 1 in a threading mode, and a first inner fixing part 212 and a first outer fixing part 213 that are connected to the first threading part 211 and arranged on an inner side and an outer side of the housing 1 respectively. The housing 1 has a first mounting hole 111 through which the first threading part 211 is threaded, the first threading part 211 includes a first surrounding wall part 2113 extending along a peripheral direction of the first mounting hole 111, the first threading part 211 includes a first end wall part 2112 disposed at an inner side of the first surrounding wall part 2113 close to the housing 1, and a first accommodating slot 2111 that is open toward an outer side of the housing 1 is formed between the first surrounding wall part 2113 and the first end wall part 2112.

The second terminal 22 includes a second threading part 221 arranged on the housing 1 in a threading mode, and a second inner fixing part 222 and a second outer fixing part 223 that are connected to the second threading part 221 and arranged on the inner side and the outer side of the housing 1 respectively. The housing 1 has a second mounting hole 112 through which the second threading part 221 is threaded, the second threading part 221 includes a second surrounding wall part 2213 extending along a peripheral direction of the second mounting hole 112, the second threading part 221 includes a second end wall part 2212 disposed at an inner side of the second surrounding wall part 2213 close to the housing 1, and a second accommodating slot 2211 that is open toward the outer side of the housing 1 is formed between the second surrounding wall part 2213 and the second end wall part 2212.

A wall thickness t1 of the first inner fixing part 212 is greater than a wall thickness t2 of the second inner fixing part 222 (that is, t1 > t2). A wall thickness t3 of the first end wall part 2112 is greater than the wall thickness t1 of the first inner fixing part 212 (that is, t3 > t1). A wall thickness t4 of the second end wall part 2212 is less than the wall thickness t2 of the second inner fixing part 222 (that is, t2 > t4). The wall thickness t3 of the first end wall part 2112 is greater than the wall thickness t4 of the second end wall part 2212 (that is, t3 > t4). That is, t3 > t1 > t2 > t4.

the first accommodating slot 2111 corresponding to the first end wall part 2112 of the positive terminal having a relatively weak material strength is easily deformed during simulated aeration, the thickness of the first end wall part 2112 cannot be excessively small, and the depth of fusion of welding between the first end wall part 2112 and the first conductive part 421 needs to be relatively large to satisfy a welding requirement. However, the material strength of the negative terminal is relatively strong, and even if the wall thickness of the second end wall part 2212 of the negative terminal is less than the wall thickness of the first end wall part 2112 of the positive terminal, the second end wall part is not easy to deform, and the second end wall part 2212 can also satisfy a requirement for welding with the second conductive part 422. In addition, the thickness of the first inner fixing part 212 of the positive terminal having a relatively weak material strength needs to be relatively large to satisfy the pressure resistance level. Therefore, the thickness of the first inner fixing part 212 directly determines the capacity of the battery cell 102. Therefore, the thickness of the first inner fixing part 212 cannot be excessively large. Based on the foregoing consideration, in some embodiments of the present application, the wall thickness of the first end wall part 2112 of the positive terminal is set to be greater than the wall thickness of the first inner fixing part 212, so that deformation of the first end wall part 2112 can be reduced, the depth of fusion of the welding between the first end wall part 2112 and the first conductive part 421 can be increased, and the thickness of the first inner fixing part 212 can be reduced, to increase the capacity of the battery cell 102 and reduce costs; and by setting the wall thickness of the second end wall part 2212 of the negative terminal to be less than the wall thickness of the second inner fixing part 222, and the wall thickness of the second inner fixing part 222 to be less than the wall thickness of the first inner fixing part 212, material costs and weight of the second terminal 22 can be reduced, and the volume of the second accommodating slot 2211 can be increased while ensuring the structural strength and the pressure resistance level of the second terminal 22.

It should be noted that the embodiments and features of embodiments of the present application may be combined with each other without conflict.

The foregoing merely describes exemplary embodiments of the present application and is not intended to limit the present application. For a person skilled in the art, the present application may have various modifications and changes. Any modification, equivalent replacement, or improvement made within the spirit and principle of the present application shall fall within the protection scope of the present application.

## Claims

1. A battery cell, comprising:
a housing;
a first terminal, comprising a first threading part threaded through the housing, and a first inner fixing part and a first outer fixing part that are connected to the first threading part and arranged on an inner side and an outer side of the housing respectively; and
a second terminal, comprising a second threading part threaded through the housing, and a second inner fixing part and a second outer fixing part that are connected to the second threading part and arranged on the inner side and the outer side of the housing respectively, wherein
a material strength of the first inner fixing part is less than a material strength of the second inner fixing part, and a wall thickness of the first inner fixing part is greater than a wall thickness of the second inner fixing part.

2. The battery cell according to claim 1, wherein the first threading part defines a first accommodating slot, the first accommodating slot is open toward the inner side or the outer side of the housing, the first threading part comprises a first end wall part disposed opposite to an open mouth of the first accommodating slot, a host material of the first inner fixing part is the same as that of the first end wall part, and a wall thickness of the first end wall part is greater than the wall thickness of the first inner fixing part.

3. The battery cell according to claim 2, wherein a first through-hole connecting the inner side of the housing and the first accommodating slot is formed on the first end wall part, a battery core assembly of the battery cell comprises a first conductive part electrically connected to the first terminal, the first conductive part is threaded through the first through-hole and comprises a first connection segment received in the first accommodating slot, and the first connection segment is overlapped to the first end wall part and is welded to the first end wall part.

4. The battery cell according to claim 2 or 3, wherein the first end wall part is disposed close to the inner side of the housing relative to the first accommodating slot, and an inner end surface of the first inner fixing part is flush with an inner end surface of the first end wall part.

5. The battery cell according to any one of claims 2 to 4, wherein the first end wall part is made of aluminum and has the wall thickness ranging from 2.2 mm to 0.8 mm, and the wall thickness of the first inner fixing part ranges from 2 mm to 0.8 mm.

6. The battery cell according to claim 5, wherein the wall thickness of the first end wall part is 2.2 mm, and the wall thickness of the first inner fixing part is 2 mm.

7. The battery cell according to any one of claims 1 to 6, wherein the second threading part defines a second accommodating slot, the second accommodating slot is open toward the inner side or the outer side of the housing, the second threading part comprises a second end wall part disposed opposite to an open mouth of the second accommodating slot, a host material of the second inner fixing part is the same as that of the second end wall part, and a wall thickness of the second end wall part is less than the wall thickness of the second inner fixing part.

8. The battery cell according to claim 7, wherein a second through-hole connecting the inner side of the housing and the second accommodating slot is formed on the second end wall part, the battery core assembly of the battery cell comprises a second conductive part of the second terminal, the second conductive part is threaded through the second through-hole and comprises a second connection segment received in the second accommodating slot, and the second connection segment is overlapped to the second end wall part and is welded to the second end wall part.

9. The battery cell according to claim 7 or 8, wherein the second end wall part is disposed close to the inner side of the housing relative to the second accommodating slot, and an inner end surface of the second inner fixing part is flush with an inner end surface of the second end wall part.

10. The battery cell according to any one of claims 7 to 9, wherein the second end wall part is made of copper and has the wall thickness ranging from 1.3 mm to 0.8 mm, and the wall thickness of the second inner fixing part ranges from 1.6 mm to 0.8 mm.

11. The battery cell according to claim 10, wherein the wall thickness of the second end wall part is 1.2 mm, and the wall thickness of the second inner fixing part is 1.5 mm.

12. The battery cell according to any one of claims 1 to 11, wherein the first threading part defines the first accommodating slot, the first accommodating slot is open toward the inner side or the outer side of the housing, the first threading part comprises the first end wall part disposed opposite to an open mouth of the first accommodating slot, the second threading part defines the second accommodating slot, the second accommodating slot is open toward the inner side or the outer side of the housing, the second threading part comprises the second end wall part disposed opposite to an open mouth of the second accommodating slot, wherein a material strength of the first end wall part is less than a material strength of the second end wall part, and a wall thickness of the first end wall part is greater than a wall thickness of the second end wall part.

13. The battery cell according to any one of claims 1 to 12, wherein a material strength of the first outer fixing part is less than a material strength of the second outer fixing part, and a wall thickness of the first outer fixing part is greater than a wall thickness of the second outer fixing part.

14. The battery cell according to any one of claims 1 to 13, wherein the housing has a first mounting hole through which the first threading part is threaded, the first threading part comprises a first surrounding wall part extending along a peripheral direction of the first mounting hole, and the first accommodating slot is formed in the first surrounding wall part; and the housing has a second mounting hole through which the second threading part is threaded, the second threading part comprises a second surrounding wall part extending along a peripheral direction of the second mounting hole, and the second accommodating slot is formed in the second surrounding wall part, wherein a material strength of the first surrounding wall part is less than a material strength of the second surrounding wall part, and a wall thickness of the first surrounding wall part is greater than a wall thickness of the second surrounding wall part.

15. The battery cell according to any one of claims 1 to 14, wherein the first terminal is an integral member having a same host material everywhere, the second terminal is an integral member having a same host material everywhere, and a material strength of the second terminal is greater than a material strength of the first terminal.

16. The battery cell according to claim 15, wherein the first terminal is a positive terminal, the host material of the first terminal is aluminum, the second terminal is a negative terminal, and the host material of the second terminal is copper.

17. The battery cell according to claim 16, wherein a first terminal cover plate is externally welded to the first terminal, the first terminal cover plate is an aluminum cover plate and is suitable for being welded to a bus component, a second terminal cover plate is externally welded to the second terminal, the second terminal cover plate is a copper aluminum composite cover plate and is welded to the second terminal by using a copper part, and an aluminum part of the second terminal cover plate is suitable for being welded to the bus component.

18. The battery cell according to any one of claims 1 to 17, wherein the housing comprises a first housing wall, and the first terminal and the second terminal are both disposed on the first housing wall.

19. A battery, comprising the battery cell according to any one of claims 1 to 18.

20. A power consuming apparatus, comprising the battery according to claim 19.
